(19) Europäisches Patentamt
European Patent Office
Office européen des brevets

(11) Veröffentlichungsnummer: **0 518 125 B1**

(12) **EUROPÄISCHE PATENTSCHRIFT**

(45) Veröffentlichungstag der Patentschrift: **15.11.95**

(51) Int. Cl.[6]: **C08L 23/10**, //(C08L23/10, 23:16)

(21) Anmeldenummer: **92108905.8**

(22) Anmeldetag: **27.05.92**

# (54) Hochfliessfähige Mischungen aus verschiedenen Propylenpolymerisaten.

(30) Priorität: **12.06.91 DE 4119283**

(43) Veröffentlichungstag der Anmeldung:
**16.12.92 Patentblatt 92/51**

(45) Bekanntmachung des Hinweises auf die Patenterteilung:
**15.11.95 Patentblatt 95/46**

(84) Benannte Vertragsstaaten:
**BE DE ES FR GB IT NL**

(56) Entgegenhaltungen:
**EP-A- 0 067 525**
**EP-A- 0 208 330**

(73) Patentinhaber: **BASF Aktiengesellschaft**
**Carl-Bosch-Strasse 38**
**D-67063 Ludwigshafen (DE)**

(72) Erfinder: **Schwager, Harald, Dr.**
**Ziegelofenweg 7**
**W-6720 Speyer (DE)**
Erfinder: **Hungenberg, Klaus-Dieter, Dr.**
**Ortsstrasse 135**
**W-6943 Birkenau (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die vorliegende Erfindung betrifft Propylenpolymerisat-Mischungen, enthaltend

a) ein Propylenhomopolymerisat mit einem Schmelzflußindex von 0,001 bis 5 g/10 min., bei 230 °C und unter einem Gewicht von 2,16 kg,

b) ein Propylen-Ethylen-Copolymerisat mit einem Ethylengehalt von 5 bis 80 Gew.-% und

c) ein Propylenhomopolymerisat mit einem Schmelzflußindex von 1 bis $10^4$ g/10 min., bei 230 °C und unter einem Gewicht von 2,16 kg,

wobei das Verhältnis der Schmelzflußindices zwischen dem Propylenhomopolymerisat c) und dem Propylenhomopolymerisat a) im Bereich von 10 : 1 bis $10^7$ : 1 liegt.

Außerdem betrifft die vorliegende Erfindung Verfahren zur Herstellung der erfindungsgemäßen Mischungen und Folien und Formkörper aus diesen Mischungen.

Die Eigenschaften von Polymeren können durch Zumischen von anderen Polymeren verändert werden, wobei Polymermischungen, sogenannte "Blends" entstehen. So lassen sich beispielsweise die Eigenschaften von harten, temperaturbeständigen Polymeren mit denen von weichen, elastischen Polymeren durch Vermischen derart kombinieren, daß die dabei erhältlichen "Blends" eine vorteilhafte Kombination der guten Eigenschaften beider Polymerer darstellen (Saechtling, Kunststoff-Taschenbuch, Carl Hanser-Verlag, München, Seite 8, [1986]). Durch Vermischung mehrerer Polyolefine ist es zum Beispiel möglich, Produkte herzustellen, die zum Teil gegensätzliche Eigenschaften, wie eine hohe Schlagzähigkeit bei gleichzeitig hoher Steifigkeit, aufweisen.

Eine Kombination unterschiedlicher mechanischer Eigenschaften, insbesondere einer hohen Schlagzähigkeit bei noch ausreichend hoher Steifigkeit, läßt sich auch bei bestimmten Propylen-Ethylen-Copolymerisaten beobachten. Diese sind durch Ziegler-Natta-Katalyse erhältlich (US-A 4 454 299, US-A 4 455 405, ZA-B 0084/3561, ZA-B 0084/3563, ZA-B 0084/5261, EP-A 355 603, GB-A 1 032 945), wobei man zunächst gasförmiges Propylen in einer ersten Reaktionsstufe polymerisiert und das daraus resultierende Homopolymerisat anschließend in eine zweite Reaktionsstufe bringt, wo diesem ein Gemisch aus Ethylen und Propylen hinzupolymerisiert wird. Die Verfahren werden gewöhnlich bei erhöhtem Druck und in Anwesenheit von Wasserstoff als Molmassenregler durchgeführt. Dabei zeigen vor allem die Copolymerisate mit höheren Molmassen gute mechanische Eigenschaften, insbesondere eine hohe Steifigkeit. Allerdings ist ihre Fließfähigkeit häufig reduziert, was ihre Verarbeitbarkeit mit den in der Kunststofftechnik üblichen Apparaturen beeinträchtigt. Copolymerisate mit niederen Molmassen wiederum zeichnen sich durch gute Fließfähigkeiten und damit verbunden durch eine gute Verarbeitbarkeit aus, ihre mechanischen Eigenschaften sind jedoch häufig unbefriedigend.

Aus der EP-A 208 330 ist eine Zusammensetzung aus zwei verschiedenen Propylenhomopolymerisaten und einem Propylen-Ethylen-Copolymerisat bekannt, die dadurch hergestellt wird, daß nach Beendigung der einzelnen Polymerisationsschritte die Zusammensetzung einer peroxidischen Abbaureaktion unterworfen wird.

Der vorliegenden Erfindung lag daher die Aufgabe zugrunde, den geschilderten Nachteilen abzuhelfen und Polymerisate mit einer hohen Fließfähigkeit zu entwickeln, die sich leicht verarbeiten lassen und darüber hinaus gute mechanische Eigenschaften, insbesondere eine hohe Steifigkeit aufweisen.

Demgemäß wurden die eingangs definierten neuen Propylenpolymerisat-Mischungen gefunden.

Die erfindungsgemäßen Mischungen enthalten ein Propylenhomopolymerisat a) mit einem Schmelzflußindex von 0,001 bis 5 g/10 min, vorzugsweise von 0,01 bis 2 g/10 min., bei 230 °C und unter einem Gewicht von 2,16 kg. Der Schmelzflußindex entspricht dabei der Menge an Polymerisat, die innerhalb von 10 Minuten aus der nach DIN 53 735 genormten Prüfvorrichtung bei einer Temperatur von 230 °C und unter einem Gewicht von 2,16 kg ausgepreßt wird. Weitere Bestandteile der erfindungsgemäßen Mischungen sind ein Propylen-Ethylen-Copolymerisat b) mit einem Ethylengehalt von 5 bis 80 Gew.-%, insbesondere von 20 bis 75 Gew.-% und ein Propylenhomopolymerisat c) mit einem Schmelzflußindex von 1 bis $10^4$ g/10 min, vorzugsweise von 1 bis $10^3$ g/10 min, bei 230 °C und unter einem Gewicht von 2,16 kg. Dabei liegen die einzelnen Bestandteile vorteilhaft in solchen Mengenverhältnissen vor, daß die erfindungsgemäße Mischung aus 40 bis 97 Gew.-% Propylenhomopolymerisate a) und c) und 3 bis 60 Gew.-% Propylen-Ethylen-Copolymerisat b) enthält. Besonders bevorzugt sind solche Mischungen, die 50 bis 95 Gew.-% Propylenhomopolymerisate a) und c) und 5 bis 50 Gew.-% Propylen-Ethylen-Copolymerisat b) enthalten.

Ein weiteres wesentliches Merkmal der erfindungsgemäßen Mischungen besteht darin, daß sich die Propylenhomopolymerisate a) und c) hinsichtlich ihrer Schmelzflußindices, bei 230 °C und unter einem Gewicht von 2,16 kg, um wenigstens den Faktor 10 unterscheiden. Dabei liegt das Verhältnis der Schmelzflußindices zwischen dem Propylenhomopolymerisat c) und dem Propylenhomopolymerisat a) im Bereich von 10 : 1 bis $10^7$ : 1, insbesondere im Bereich von 10 : 1 bis $10^5$ : 1. Besonders bevorzugt sind

dabei solche erfindungsgemäßen Mischungen, bei denen das Verhältnis der Schmelzflußindices zwischen dem fließfähigeren Propylenhomopolymerisat c) und dem weniger fließfähigeren Propylenhomopolymerisat a) 10 : 1 bis $10^3$ : 1 beträgt.

Das Gewichtsverhältnis zwischen dem Propylenhomopolymerisat a) und dem Propylenhomopolymerisat c) liegt üblicherweise im Bereich von 0,1 : 1 bis 20 : 1. Bevorzugt wird dabei ein Gewichtsverhältnis zwischen dem Propylenhomopolymerisat a) und dem Propylenhomopolymerisat c) von 0,15 : 1 bis 15 : 1 und insbesondere von 0,2 : 1 bis 10 : 1.

Die in den erfindungsgemäßen Mischungen vorliegenden Polymerisate, das fließfähigere Propylenhomopolymerisat c) und das weniger fließfähigere Propylenhomopolymerisat a) sowie das Propylen-Ethylen-Copolymerisat b) lassen sich alle durch Polymerisation mit Hilfe von Ziegler-Natta-Katalysatoren in den in der Technik gebräuchlichen Polymerisationsreaktoren herstellen. Die Polymerisation kann dabei sowohl in Lösung, in Suspension oder in Gasphase durchgeführt werden, wobei die Polymeriation in der Gasphase bevorzugt ist. Die dabei verwendeten Ziegler-Natta-Katalysatoren bestehen üblicherweise aus einer Feststoffkomponente, die neben Titan, Magnesium und einem Halogen noch einen Elektronendonor aufweist, einer Aluminiumkomponente und einer weiteren Elektronendonorkomponente.

Zur Herstellung der titanhaltigen Feststoffkomponente werden als Titanverbindungen im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen feinteiligen Träger, wofür sich Silicium- und Aluminiumoxide, sowie Aluminiumsilicate der Bruttoformel $SiO_2 \cdot aAl_2O_3$, wobei a für einen Wert von 0,001 bis 2, insbesondere von 0,01 bis 0,5 steht, gut bewährt haben.

Die bevorzugt verwendeten Träger weisen ein Teilchendurchmesser von 0,1 bis 1000 µm, insbesondere von 10 bis 300 µm, ein Porenvolumen von 0,1 bis 10 $cm^3/g$, insbesondere von 1,0 bis 5,0 $cm^3/g$ und eine spezifische Oberfläche von 10 bis 1000 $m^2/g$, insbesondere von 100 bis 500 $m^2/g$ auf.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesiumdi-($C_1$-$C_{10}$-alkyl)-Verbindungen verwendet werden. Daneben kann die titanhaltige Feststoffkomponente noch Halogen, bevorzugt Chlor oder Brom, enthalten.

Ferner enthält die titanhaltige Feststoffkomponente noch Elektronendonorverbindungen, beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel I

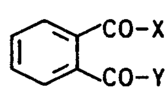

I

verwendet, wobei X und Y jeweils für ein Chloratom oder einen $C_1$- bis $C_{10}$-Alkoxyrest oder gemeinsam für Sauerstoff stehen. Besonders bevorzugte Elektronendonorverbindungen sind Phthalsäureester, wobei X und Y einen $C_1$-$C_8$-Alkoxyrest, beispielsweise einen Methoxy-, Ethoxy-, Propyloxy- oder einen Butyloxyrest bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren, sowie Monoester von, gegebenenfalls substituierten Benzophenon-2-carbonsäuren. Als Hydroxyverbindungen werden bei diesen Estern die bei Veresterungsreaktionen üblichen Alkohole verwendet, u.a. $C_1$- bis $C_{15}$-Alkanole, $C_5$- bis $C_7$-Cycloalkanole, die ihrerseits $C_1$- bis $C_{10}$-Alkylgruppen tragen können, ferner $C_6$- bis $C_{10}$-Phenole.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der GB-A 2 111 066 und der US-A 4 857 613 beschrieben.

Bei der Herstellung der titanhaltigen Feststoffkomponente wird bevorzugt folgendes dreistufige Verfahren angewandt:

In der ersten Stufe versetzt man zunächst einen feinteiligen Träger, bevorzugt $SiO_2 \cdot aAl_2O_3$ - wobei a für eine Zahl im Bereich von 0,001 bis 2, insbesondere im Bereich von 0,01 bis 0,5 steht - mit einer Lösung

der magnesiumhaltigen Verbindung in einem flüssigen Alkan, wonach man dieses Gemisch 0,5 bis 5 Stunden lang bei einer Temperatur zwischen 10 und 120 °C rührt. Vorzugsweise setzt man pro Mol des Trägers 0,1 bis 1 mol der Magnesiumverbindung ein. Anschließend fügt man unter ständigem Rühren ein Halogen oder einen Halogenwasserstoff, insbesondere Chlor oder Chlorwasserstoff im wenigstens zweifachen, bevorzugt im wenigstens fünffachen molaren überschuß, bezogen auf die magnesiumhaltige Verbindung, hinzu. Nach etwa 30 bis 120 Minuten trennt man den Feststoff von der flüssigen Phase ab.

In der zweiten Stufe bringt man das auf diese Weise erhaltene Produkt in ein flüssiges Alkan ein und fügt danach ein $C_1$- bis $C_8$-Alkanol, insbesondere Ethanol, ein Halogenid oder ein Alkoholat des drei- oder vierwertigen Titans, insbesondere Titantetrachlorid, sowie eine Elektronendonorverbindung hinzu. Dabei setzt man pro Mol Magnesium des aus der ersten Stufe erhaltenen Feststoffs 1 bis 5 mol, insbesondere 2 bis 4 mol, Alkanol, 2 bis 20 mol, insbesondere 4 bis 10 mol, des drei- oder vierwertigen Titans und 0,01 bis 1 mol, insbesondere 0,1 bis 1 mol, der Elektronendonorverbindung ein. Dieses Gemisch wird wenigstens eine Stunde lang bei einer Temperatur zwischen 10 und 150 °C gerührt, der so erhaltene feste Stoff anschließend abfiltriert und mit einem flüssigen Alkan, bevorzugt mit Hexan oder Heptan, gewaschen.

In der dritten Stufe extrahiert man den aus der zweiten Stufe erhaltenen Feststoff einige Stunden lang bei Temperaturen zwischen 100 und 150 °C mit überschüssigem Titantetrachlorid oder einer im Überschuß vorliegenden Lösung von Titantetrachlorid in einem inerten Lösungsmittel, vorzugsweise einem Alkylbenzol, wobei das Lösungsmittel wenigstens 5 Gew.-% Titantetrachlorid enthält. Danach wäscht man das Produkt solange mit einem flüssigen Alkan, bis der Gehalt der Waschflüssigkeit an Titantetrachlorid weniger als 2 Gew.-% beträgt.

Die auf diese Weise erhältliche titanhaltige Feststoffkomponente wird mit Cokatalysatoren als Ziegler-Natta-Katalysatorsystem verwendet. Als Cokatalysatoren kommen dabei Aluminiumverbindungen und Elektronendonorverbindungen in Frage.

Als Cokatalysator geeignete Aluminiumverbindungen sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung noch als weiteren Cokatalysator Elektronendonorverbindungen wie beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugte Elektronendonorverbindungen sind dabei siliciumorganische Verbindungen der allgemeinen Formel II

$R^1_nSi(OR^2)_{4-n}$ II.

wobei

$R^1$ gleich oder verschieden ist und eine $C_1$- bis $C_{20}$-Alkylgruppe, eine 5- bis 7-gliedrige Cycloalkylgruppe, die ihrerseits eine $C_1$- bis $C_{10}$-Alkylgruppe tragen kann, oder eine $C_6$- bis $C_{20}$-Aryl- oder Arylalkylgruppe bedeutet, $R^2$ gleich oder verschieden ist und eine $C_1$- bis $C_{20}$-Alkylgruppe bedeutet und n für die Zahlen 1, 2 oder 3 steht. Besonders bevorzugt werden dabei solche Verbindungen, in denen $R^1$ eine $C_1$- bis $C_8$-Alkylgruppe oder eine 5- bis 7-gliedrige Cycloalkylgruppe, sowie $R^2$ eine $C_1$- bis $C_4$-Alkylgruppe bedeutet und n für die Zahlen 1 oder 2 steht.

Unter diesen Verbindungen sind insbesondere Dimethoxydiisopropylsilan, Dimethoxyisobutylisopropylsilan, Dimethoxydiisobutylsilan, Dimethoxydicyclopentylsilan und Diethoxyisobutylisopropylsilan hervorzuheben.

Bevorzugt werden solche Katalysatorsysteme verwendet, bei denen das Atomverhältnis zwischen Aluminium aus der Aluminiumverbindung und Titan aus der titanhaltigen Feststoffkomponente 10 : 1 bis 800 : 1, insbesondere 20 : 1 bis 200 : 1, und das Molverhältnis zwischen der Aluminiumverbindung und der als Cokatalysator eingesetzten Elektronendonorverbindung 1 : 1 bis 100 : 1, insbesondere 2 : 1 bis 80 : 1 beträgt. Die einzelnen Katalysatorbestandteile können in beliebiger Reihenfolge einzeln oder als Gemisch zweier Komponenten in das Polymerisationssystem eingebracht werden.

Mit Hilfe dieser Ziegler-Natta-Katalysatorsysteme lassen sich die in den erfindungsgemäßen Mischungen vorliegenden Polymerisate mit den in der Technik üblichen Polymerisationsreaktoren herstellen. Wird dabei die Polymerisation in der Gasphase durchgeführt, so empfiehlt es sich, die Reaktoren mit feinteiligen Polymerisaten als Füllstoffe, beispielsweise mit Polyolefinen sowie mit geeigneten Rührvorrichtungen zu versehen. Die Molmasse der dabei erhaltenen Polymerisate kann mit den in der Polymerisationstechnik üblichen Reglern, beispielsweise mit Wasserstoff, kontrolliert werden.

Die Darstellung der Propylenhomopolymerisate a) und c) erfolgt vorzugsweise in der Gasphase durch eine einstufige Polymerisation bei Temperaturen von 50 bis 110 °C, Drücken von 10 bis 50 bar und mittleren Verweilzeiten von 0,2 bis 5 Stunden. Bevorzugt sind dabei Temperaturen von 60 bis 100 °C, Drücke von 15 bis 40 bar und mittlere Verweilzeiten von 0,2 bis 4 Stunden. Zur Erhöhung des Schmelzflußindices und damit der Fließfähigkeit werden insbesondere bei der Herstellung des Propylenhomopolymerisats c) Regler, insbesondere Wasserstoff, verwendet. In geringem Umfang können die Propylenhomopolymerisate a) und c) noch weitere $C_2$- bis $C_{10}$-Alk-1-ene, beispielsweise Ethylen, But-1-en, Pent-1-en oder Hex-1-en enthalten, wobei in diesem Fall das Verhältnis der Partialdrücke zwischen den weiteren $C_2$- bis $C_{10}$-Alk-1-enen und dem Propylen im allgemeinen nicht mehr als 1 : 100, vorzugsweise nicht mehr als 0,5 : 100 beträgt.

Die Herstellung des Propylen-Ethylen-Copolymerisats b) erfolgt vorzugsweise ebenfalls durch Ziegler-Natta-Polymerisation, vorzugsweise aus der Gasphase heraus in Anwesenheit eines gerührten, feinteiligen Polymerisats als Füllstoff und eines Molmassenreglers, insbesondere Wasserstoff. Dabei werden Propylen und Ethylen bei Temperaturen von 40 bis 110 °C, Drücken von 5 bis 50 bar und mittleren Verweilzeiten von 0,2 bis 5 Stunden zusammen copolymerisiert. Bevorzugt sind dabei Temperaturen von 50 bis 100 °C, Drücke von 6 bis 40 bar und mittlere Verweilzeiten von 0,2 bis 4 Stunden. Das Partialdruckverhältnis zwischen Propylen und Ethylen liegt üblicherweise im Bereich von 20 : 1 bis 1 : 20, insbesondere im Bereich von 15 : 1 bis 1 : 15. Das daraus erhältliche Propylen-Ethylen-Copolymerisat kann in geringem Umfang noch $C_4$- bis $C_{10}$-Alk-1-ene, beispielsweise But-1-en, Pent-1-en oder Hex-1-en enthalten, wobei auch hier das Verhältnis der Partialdrücke zwischen den $C_4$- bis $C_{10}$-Alk-1-enen und dem Propylen im allgemeinen nicht mehr als 1 : 100, vorzugsweise nicht mehr als 0,5 : 100 beträgt.

Zur Herstellung der erfindungsgemäßen Mischungen werden die Propylenhomopolymerisate a) und c) und das Propylen-Ethylen-Copolymerisat b) in geeigneter Weise miteinander vermischt. Dies kann ganz allgemein in den in der Kunststoffverarbeitung üblicherweise zur Vereinigung von Stoffen eingesetzten Apparaturen, beispielsweise in Trommelmischern, in Mühlen, in Schnecken- oder Scheibenextrudern, in Walzwerken oder Knetern sowie in gerührten Polymerisationsreaktoren erfolgen. Der Mischungsvorgang erfolgt in der Regel bei Temperaturen von 30 bis 280 °C, insbesondere von 50 bis 250 °C und Drücken von 1 bis 100 bar, insbesondere von 2 bis 50 bar. Die mittleren Verweilzeiten der zu vermischenden Polymerisate hängen jeweils von der Art der Mischungsapparaturen ab. In Extrudern betragen sie üblicherweise etwa 0,2 bis 10 Minuten, bevorzugt 0,5 bis 5 Minuten. Bei anderen Mischapparaturen können die mittleren Verweilzeiten aber auch wesentlich länger sein.

Nach einer speziellen Ausführungsform eines zu den erfindungsgemäßen Mischungen führenden Verfahrens werden die Propylenhomopolymerisate a) und c) und das Propylen-Ethylen-Copolymerisat b) nach einem dreistufigen Polymerisationsverfahren hergestellt. Dabei wird in einer ersten Polymerisationsstufe Propylen aus der Gasphase heraus mit Hilfe eines Ziegler-Natta-Katalysators polymerisiert und anschließend wird das dabei erhältliche Propylenhomopolymerisat zusammen mit dem Katalysator in eine zweite Polymerisationsstufe überführt, wo erneut Propylen polymerisiert wird. Durch entsprechendes Einstellen der jeweiligen Polymerisationsbedingungen können sowohl in der ersten als auch in der zweiten Polymerisationsstufe die Propylenhomopolymerisate a) und c) hergestellt werden, wobei es unerheblich ist, welches Propylenhomopolymerisat in der ersten und welches in der zweiten Polymerisationsstufe produziert wird. Die genauen Polymerisationsbedingungen entsprechen in jedem Fall denen für die getrennte Herstellung der Propylenhomopolymerisate a) und c), so daß diesbezüglich auf hierin bereits gemachten Ausführungen verwiesen werden kann. In der darauf folgenden dritten Polymerisationsstufe wird den beiden Propylenhomopolymerisaten a) und c) ein Gemisch aus Propylen und Ethylen hinzupolymerisiert, wobei die exakten Polymerisationsbedingungen wiederum der bereits beschriebenen Herstellung der Propylen-Ethylen-Copolymerisate b) entnommen werden können. Ergänzend sei hierbei lediglich hinzugefügt, daß die Anteile der einzelnen Polymerisate, also der in den beiden ersten Polymerisationsstufen gebildeten Propylenhomopolymerisate a) und c) und die des in der dritten Polymerisationsstufe hergestellten Propylen-Ethylen-Copolymerisats b) durch Variation der Gewichtsverhältnisse der in den einzelnen Polymerisationsstufen umgesetzten Monomere zueinander verändert werden können. Üblicherweise liegt dabei das Gewichtsverhältnis zwischen den in der ersten und den in der zweiten Polymerisationsstufe umgesetzten Monomeren bei 20 : 1 bis 1 : 20, insbesondere bei 10 : 1 bis 1 : 10, und das zwischen den in den beiden ersten und den in der dritten Polymerisationsstufe umgesetzten Monomeren bei 50 : 1 bis 0,5 : 1, insbesondere bei 40 : 1 bis 1 : 1.

Bei diesem dreistufigen Verfahren besteht noch die Möglichkeit, dem Reaktionsgemisch in der dritten Polymerisationsstufe ein $C_1$- bis $C_8$-Alkanol, insbesondere ein $C_1$- bis $C_4$-Alkanol, hinzuzufügen, welches die Aktivität des Ziegler-Natta-Katalysators beeinflußt. Dafür gut geeignete Alkanole sind u.a. Methanol, Ethanol, n-Propanol, n-Butanol und ganz besonders Isopropanol. Die Menge des hinzugefügten $C_1$- bis $C_8$-

Alkanols wird dabei zweckmäßigerweise so bemessen, daß das Molverhältnis zwischen der Aluminiumverbindung im Katalysatorsystem und dem $C_1$- bis $C_8$-Alkanol 0,1 : 1 bis 10 : 1, insbesondere 0,2 : 1 bis 5 : 1 beträgt.

Weiterhin können die erfindungsgemäßen Mischungen auch dadurch hergestellt werden, daß man eine Polymermischung I aus einem Propylenhomopolymerisat a) und einem Propylen-Ethylen-Copolymerisat b) mit einem Propylenhomopolymerisat c), oder aber eine Polymermischung II aus einem Propylenhomopolymerisat c) und einem Propylen-Ethylen-Copolymerisat b) mit einem Propylenhomopolymerisat a) umsetzt. Die Umsetzung wird dabei in den in der Kunststofftechnik gebräuchlichen Mischapparaturen bei Temperaturen von 30 bis 280 °C, insbesondere von 50 bis 250 °C und Drücken von 1 bis 100 bar, insbesondere von 1 bis 50 bar durchgeführt.

Darüber hinaus besteht noch die Möglichkeit, die Polymermischungen I oder II mit einer weiteren Mischung aus zwei unterschiedlichen Propylenhomopolymerisaten umzusetzen, wobei diese Propylenhomopolymerisate nicht mit den Propylenhomopolymerisaten a) und c) der Polymermischungen I oder II übereinstimmen müssen.

Die Herstellung der Polymermischungen I und II wiederum erfolgt üblicherweise durch zweistufige Polymerisation mit Hilfe eines Ziegler-Natta-Katalysatorsystems, wobei entsprechend den Herstellungsverfahren für die Propylenhomopolymerisate a) und c) in der ersten Polymerisationsstufe Propylen polymerisiert wird und dem aus der ersten Polymersiationsstufe ausgetragenen Gemisch aus Propylenhomopolymerisat a) oder c) und Katalysator anschließend in der zweiten Polymerisationsstufe entsprechend der Herstellung des Propylen-Ethylen-Copolymerisats b) ein Gemisch aus Propylen und Ethylen hinzupolymerisiert wird. Die genauen Polymerisationsbedingungen sind analog denen, die bei der jeweils einstufigen Herstellung der einzelnen Polymerisate einzustellen sind. Üblicherweise liegt dabei das Gewichtsverhältnis zwischen den in der ersten und den in der zweiten Polymerisationsstufe umgesetzten Monomeren bei 50 : 1 bis 0,5 : 1, insbesondere bei 40 : 1 bis 1 : 1.

Auch hier besteht noch die Möglichkeit, dem Reaktionsgemisch in der zweiten Polymerisationsstufe ein $C_1$- bis $C_8$-Alkanol, insbesondere ein $C_1$- bis $C_4$-Alkanol, hinzuzufügen, welches die Aktivität des Ziegler-Natta-Katalysators beeinflußt. Dafür gut geeignete Alkanole sind u.a. Methanol, Ethanol, n-Propanol, n-Butanol und ganz besonders Isopropanol. Die Menge des hinzugefügten $C_1$- bis $C_8$-Alkanols wird dabei zweckmäßigerweise so bemessen, daß das Molverhältnis zwischen der Aluminiumverbindung und dem $C_1$- bis $C_8$-Alkanol 0,1 : 1 bis 10 : 1, insbesondere 0,2 : 1 bis 5 : 1 beträgt.

Die erfindungsgemäßen Mischungen aus verschiedenen Propylenpolymerisaten zeichnen sich vor allem durch eine hohe Fließfähigkeit aus, wodurch sie leicht verarbeitet werden können. Ihre Schmelzflußindices liegen im Bereich von 0,1 bis 100 g/10 min., insbesondere im Bereich von 0,1 bis 50 g/10 min., bei 230 °C und unter einem Gewicht von 2,16 kg.

Die erfindungsgemäßen Mischungen eignen sich u.a. zur Herstellung von Folien und Formkörpern, bei denen eine leichte Verarbeitbarkeit wichtig ist.

Beispiele

I. Herstellung der erfindungsgemäßen Mischungen durch Vermengen von Polymermischungen II mit Propylenhomopolymerisaten a)

Beispiele 1 bis 4

A. Herstellung der Polymermischungen II

Die Herstellung der Polymermischungen II erfolgte in zwei hintereinander geschalteten Rührautoklaven mit einem Nutzvolumen von jeweils 200 l in Anwesenheit von Wasserstoff als Molmassenregler. Beide Rührautoklaven enthielten ein bewegtes Festbett aus feinteiligem Polypropylen.

In den ersten Polymerisationsreaktor wurde bei einem Druck von 32 bar und einer Temperatur von 80 °C gasförmiges Propylen eingeleitet und dieses kontinuierlich mit Hilfe eines Ziegler-Natta-Katalysators polymerisiert. Dabei wurden pro Stunde 1 g einer titanhaltigen Feststoffkomponente, 60 mmol Triethylaluminium und 6 mmol Dimethoxyisobutylisopropylsilan als Katalysatorbestandteile verwendet. Die mittlere Verweilzeit des Reaktionsgemisches betrug 2 Stunden. Bei diesem Verfahren wurden pro mmol der Aluminiumverbindung 0,3 kg Polypropylen erzeugt. Die titanhaltige Feststoffkomponente wurde nach folgendem Verfahren hergestellt.

Dazu versetzte man in einer ersten Stufe $SiO_2$, welches einen Teilchendurchmesser von 20 bis 45 $\mu$m, ein Porenvolumen von 1,75 $cm^3$/g und eine Oberfläche von 320 $m^2$/g aufwies, mit in n-Heptan gelöstem

Buntyl-octylmagnesium, wobei pro Mol $SiO_2$ 0,3 mol der Magnesiumverbindung eingesetzt wurden. Die Lösung wurde 1,5 Stunden lang bei 90 ° C gerührt, danach auf 20 ° C abgekühlt, und anschließend wurde die 10-fache molare Menge, bezogen auf die magnesiumorganische Verbindung, an Chlorwasserstoff eingeleitet. Nach 30 Minuten trennte man das festphasige Produkt vom Lösungsmittel ab.

Das aus der ersten Stufe erhältliche Produkt wurde mit n-Heptan versetzt und anschließend wurden unter ständigem Rühren 3 mol Ethanol, bezogen auf 1 mol Magnesium hinzugefügt. Dieses Gemisch wurde 1,5 Stunden bei 80 ° C gerührt und danach mit 6 mol Titantetrachlorid und 0,5 mol Phthalsäure-di-n-butylester, jeweils bezogen auf 1 mol Magnesium, versetzt. Das Reaktionsgemisch wurde weitere zwei Stunden gerührt, wonach der Feststoff vom Lösungsmittel durch Filtration abgetrennt wurde.

Das so erhaltene Produkt extrahierte man zwei Stunden lang bei 125 ° C mit einer 15 gew.-%igen Lösung von Titantetrachlorid in Ethylbenzol. Danach wurde das Festprodukt durch Filtration vom Extraktionsmittel getrennt und solange mit n-Heptan gewaschen, bis dieses nur mehr 0,3 Gew.-% Titantetrachlorid enthielt.

Die daraus resultierende titanhaltige Feststoffkomponente enthielt 3,1 Gew.-% Titan, 7,5 Gew.-% Magnesium und 28,3 Gew.-% Chlor.

Das im ersten Reaktor gebildete Propylenhomopolymerisat wurde zusammen mit dem Katalysator in den zweiten Rührautoklaven übergeführt und dort wurde diesem Polymerisat bei einer mittleren Verweilzeit von 2 Stunden ein Gemisch aus Propylen und Ethylen in Anwesenheit von Isopropanol hinzupolymerisiert. Die genauen Reaktionsbedingungen in dieser zweiten Polymerisationsstufe, also Druck, Temperatur, das Partialdruckverhältnis zwischen Propylen und Ethylen, der Ethylenanteil des in dieser Stufe gebildeten Propylen-Ethylen-Copolymerisats b), das Verhältnis zwischen den in der ersten und den in der zweiten Polymerisationsstufe umgesetzten Monomeren und das Molverhältnis zwischen der Aluminiumverbindung und dem Isopropanol können für die Beispiele 1 bis 4 der nachfolgenden Tabelle 1 entnommen werden. Dort sind auch die jeweiligen Schmelzflußindices für das nach der ersten Polymerisationsstufe erhaltene Propylenhomopolymerisat c) und das nach der zweiten Polymerisationsstufe erhaltene Polymergemisch II wiedergegeben.

Tabelle 1

| Herstellung der Polymermischungen II | | | | |
|---|---|---|---|---|
| | Beispiele | | | |
| Bedingungen in der zweiten Polymerisationsstufe | 1 | 2 | 3 | 4 |
| Druck [bar] | 20 | 20 | 20 | 15 |
| Temperatur [ ° C] | 70 | 80 | 70 | 70 |
| Partialdruckverhältnis Propylen:Ethylen | 2,3:1 | 2,3:1 | 2,3:1 | 2,3:1 |
| Ethylenanteil im Propylen-Ethylen-Copolymerisat b) [Gew.-%] | 50 | 50 | 50 | 50 |
| Verhältnis zwischen den in der ersten und den in der zweiten Polymerisationsstufe umgesetzten Monomeren | 1,9:1 | 1,7:1 | 1:1 | 4:1 |
| Molverhältnis zwischen der Aluminiumverbindung und dem Isopropanol | 1,1:1 | 2:1 | 5:1 | 0,77:1 |
| Schmelzflußindex*) für das nach der ersten Stufe erhaltene Propylenhomopolymerisat c) | 15,7 | 29,1 | 15,0 | 20,1 |
| Schmelzflußindex*) für die nach der zweiten Stufe erhaltene Polymermischung II | 2,6 | 9,5 | 2,9 | 3,8 |

*) nach DIN 53 735, bei 230 ° C und 2,16 kg

B. Vermischen der in den Beispielen 1 bis 4 hergestellten Polymermischungen II mit den entsprechenden Propylenhomopolymerisaten a)

In einem Zweischneckenextruder der Firma Werner & Pfleiderer ("ZSK 30" bzw. "ZSK 40") wurden die in den Beispielen 1 bis 4 hergestellten Polymermischungen II bei einer Temperatur von 220 ° C und einer mittleren Verweilzeit von ca. 3 Minuten mit den entsprechenden Propylenhomopolymerisaten a) umgesetzt.

In der nachfolgenden Tabelle 2 sind die jeweils eingesetzten Polymerisate, ferner die Schmelzflußindices des jeweils verwendeten, hinzugemischten Propylenhomopolymerisats a) und die Anteile der Propylenhomopolymerisate a) und c) sowie des Propylen-Ethylen-Copolymerisats b) an der erfindungsgemäßen Mischung wiedergegeben.

Tabelle 2

Vermischen der Polymermischungen II mit den Propylenhomopolymerisaten a)

| | Beispiele | | | | | | | |
|---|---|---|---|---|---|---|---|---|
| | 1/1 | 1/2 | 1/3 | 1/4 | 2/1 | 2/2 | 2/3 | 2/4 |
| Verwendete Polymermischung II aus Beispiel von A | 1 | 1 | 1 | 1 | 2 | 2 | 2 | 2 |
| Schmelzflußindex*) des Propylenhomopolymerisats a) [g/10 min.] | 0,05 | 0,15 | 0,05 | 0,15 | 0,05 | 0,15 | 0,05 | 0,15 |
| Anteil des Propylenhomopolymerisats a), [Gew.-%] | 46,3 | 46,3 | 55,4 | 55,4 | 47,1 | 47,1 | 57,1 | 57,1 |
| Anteil des Propylenhomopolymerisats c), [Gew.-%] | 35,2 | 35,2 | 29,2 | 29,2 | 33,3 | 33,3 | 27,0 | 27,0 |
| Anteil der Propylenhomopolymerisate a) + c) [Gew.-%] | 81,5 | 81,5 | 84,6 | 84,6 | 80,4 | 80,4 | 84,1 | 84,1 |
| Anteil des Propylen-Ethylen-Copoly. b) [Gew.-%] | 18,5 | 18,5 | 15,4 | 15,4 | 19,6 | 19,6 | 15,9 | 15,9 |
| Gewichtsverhältnis Propylenhomopolymerisat a) zu Propylenhomopolymerisat c) | 1,3/1 | 1,3/1 | 1,9/1 | 1,9/1 | 1,4/1 | 1,4/1 | 2,1/1 | 2,1/1 |

*) nach DIN 53 735, bei 230°C und 2,16 kg

Tabelle 2 ff.

Vermischen der Polymermischungen II mit den Propylenhomopolymerisaten a)

| | Beispiele | | | | | |
|---|---|---|---|---|---|---|
| | 3/1 | 3/2 | 3/3 | 3/4 | 4/1 | 4/2 |
| Verwendete Polymermischung II aus Beispiel von A | 3 | 3 | 3 | 3 | 4 | 4 |
| Schmelzflußindex*) des Propylenhomopolymerisats a) [g/10 min.] | 0,05 | 0,15 | 0,05 | 0,15 | 0,05 | 0,15 |
| Anteil des Propylenhomopolymerisats a), [Gew.-%] | 33,3 | 33,3 | 60 | 60 | 24,2 | 24,2 |
| Anteil des Propylenhomopolymerisats c), [Gew.-%] | 33,3 | 33,3 | 20 | 20 | 60,6 | 60,6 |
| Anteil der Propylenhomopolymerisate a) + c) [Gew.-%] | 66,7 | 66,7 | 80 | 80 | 84,8 | 84,8 |
| Anteil des Propylen-Ethylen-Copoly. b) [Gew.-%] | 33,3 | 33,3 | 20 | 20 | 15,2 | 15,2 |
| Gewichtsverhältnis Propylenhomopolymerisat a) zu Propylenhomopolymerisat c) | 1/1 | 1/1 | 3/1 | 3/1 | 0,4/1 | 0,4/1 |

*) nach DIN 53 735, bei 230°C und 2,16 kg

Die Eigenschaften der in den Beispielen 1/1 bis 1/4, 2/1 bis 2/4, 3/1 bis 3/4 und 4/1 und 4/2) erhaltenen, erfindungsgemäßen Mischungen aus verschiedenen Propylenpolymerisaten, also deren Schmelzflußindices und Steifigkeiten, sowie die Ergebnisse eines Spritzguß-Spiralfließtests sind in der nachfolgenden Tabelle 3 wiedergegeben.

Tabelle 3

| Eigenschaften der erfindungsgemäßen Mischungen | | | | | |
|---|---|---|---|---|---|
| Beispiel | Schmelzflußindex[1] [g/10 min.] | Steifigkeiten[2] [N/mm²] | Spritzguß-Spiralfließtest[3] [cm ] | | |
| | | | bei 220 ° C | 250 ° C | 280 ° C |
| 1/1 | 0,3 | 490 | 18,0 | 24,5 | 38,5 |
| 1/2 | 0,6 | 500 | 20,0 | 27,0 | 40,5 |
| 1/3 | 0,3 | 550 | 15,5 | 20,5 | 35,0 |
| 1/4 | 0,4 | 550 | 18,5 | 25,5 | 38,5 |
| 2/1 | 0,5 | 510 | 19,5 | 26,0 | 43,0 |
| 2/2 | 1,2 | 510 | 21,5 | 29,5 | 45,5 |
| 2/3 | 0,6 | 540 | 18,5 | 26,0 | 44,5 |
| 2/4 | 0,7 | 545 | 19,5 | 26,5 | 42,5 |
| 3/1 | 0,9 | 340 | | 27,0 | |
| 3/2 | 1,0 | 330 | | 28,5 | |
| 3/3 | < 0,3 | 500 | | 16,5 | |
| 3/4 | < 0,3 | 490 | | 17,5 | |
| 4/1 | 1,8 | 580 | | 37,0 | |
| 4/2 | 1,9 | 585 | | 38,5 | |

[1] nach DIN 53 735, bei 230 ° C und 2,16 kg
[2] nach DIN 53 445
[3] Bei der Bestimmung der Fließfähigkeit nach dem Spritzguß-Spiralfließtest wurde das zu untersuchende Polymerisat unter den angegebenen Temperaturen, d.h. 220 ° C, 250 ° C und 280 ° C in eine Spritzgußmaschine ("Windsor Sp 130") mit einem Schneckendurchmesser von 42 mm und einer Düsenbohrung mit 3 mm Durchmesser eingespritzt und dort bei einer Schneckendrehzahl von 100 Umdrehungen pro Minute 16 Sekunden lang spritzgegossen. Anschließend wurde das Polymerisat 6 Sekunden lang abgekühlt.

Als Maß für die Fließfähigkeit des zu untersuchenden Polymerisats wurde die Länge der mit dem Polymerisat gefüllten Spirale vermessen.

II Herstellung der erfindungsgemäßen Mischungen nach einem dreistufigen Polymerisationsverfahren

Beispiele 5 und 6

Die Herstellung der erfindungsgemäßen Mischungen erfolgte hierbei in einem 10 l-Rührautoklaven mit Hilfe eines Ziegler-Natta-Katalysatorsystems, wobei pro Stunde 200 mg der gleichen, bereits in den Beispielen 1 bis 4 verwendeten titanhaltigen Feststoffkomponente, 10 mmol Triethylaluminium und 1 mmol Dimethoxyisobutylisopropylsilan als Katalysatorbestandteile verwendet wurden.

In der ersten Polymerisationsstufe wurde in beiden Beispielen 5 und 6 Propylen bei einer Temperatur von 70 ° C und einem Druck von 28 bar mit Hilfe des erwähnten Ziegler-Natta-Katalysatorsystems polymerisiert.

Nach Beendigung der Reaktion in der ersten Polymerisationsstufe wurde der Rührautoklav zunächst auf 10 bar entspannt und anschließend wurde darin in Anwesenheit von 30 l Wasserstoff bei einer Temperatur von 70 ° C und unter einem Druck von 28 bar erneut Propylen polymerisiert. Das in der ersten Polymerisationsstufe gebildete Polypropylen verblieb dabei zusammen mit dem Ziegler-Natta-Katalysator im Rührautoklaven.

Am Anschluß an diese zweite Propylenhomopolymerisation wurde der Rührautoklav erneut auf 4 bar entspannt und danach wurde in Anwesenheit der bisher hergestellten Propylenhomopolymerisate und des Ziegler-Natta-Katalysators ein Gemisch aus Propylen und Ethylen polymerisiert. In dieser dritten Polymerisationsstufe betrug die Temperatur 70 ° C und der Druck 8 bar.

Die jeweiligen Verweilzeiten in den drei Polymerisationsstufen können für die Beispiele 5 und 6 ebenso wie das Gewichtsverhältnis zwischen den in der ersten und den in der zweiten Polymerisationsstufe unmgesetzten Monomeren und das Gewichtsverhältnis zwischen den in den beiden ersten und den in der dritten Polymerisationsstufe umgesetzten Monomeren der nachfolgenden Tabelle 4 entnommen werden. In

dieser Tabelle ist auch das Partialdruckverhältnis der dritten Polymerisationsstufe zwischen Propylen und Ethylen wiedergegeben.

Vergleichsbeispiele A und B

Analog den Beispielen 5 und 6 wurde in zwei Polymerisationsstufen zunächst in Gegenwart von Wasserstoff Propylen polymerisiert und im Anschluß daran wurde in der zweiten Stufe Propylen und Ethylen copolymerisiert. Auf eine Polymerisation von Propylen ohne Wasserstoff wurde verzichtet. Im Gegensatz zu den erfindungsgemäßen Beispielen 5 und 6 wurde in der ersten Polymerisationsstufe in Gegenwart von Wasserstoff polymerisiert (beim Vergleichsbeispiel A mit 11,4 l, beim Vergleichsbeispiel B mit 7,1 l) und in der zweiten Polymerisationsstufe bei einem Druck von 8 bar gearbeitet. Die übrigen Reaktionsbedingungen können der nachfolgenden Tabelle 4 entnommen werden.

Tabelle 4

| Herstellung der erfindungsgemäßen Mischung durch ein dreistufiges Polymerisationsverfahren | | | | |
|---|---|---|---|---|
| | Beispiele | | Vergleichsbeispiele | |
| | 5 | 6 | A | B |
| mittlere Verweilzeiten [Minuten] | | | | |
| in der ersten Polymerisationsstufe | 30 | 45 | 120 | 120 |
| in der zweiten Polymerisationsstufe | 45 | 45 | 30 | 30 |
| in der dritten Polymerisationsstufe | 35 | 35 | - | - |
| Gewichtsverhältnis zwischen den in der ersten und den in der zweiten Polymerisationsstufe umgesetzten Monomeren | 1:2 | 1:1,5 | 6:1 | 5,4:1 |
| Gewichtsverhältnis zwischen den in den beiden ersten und den in der dritten Polymerisationsstufe umgesetzten Monomeren | 6,1:1 | 5,4:1 | - | - |
| Partialdruckverhältnis Propylen:Ethylen in der dritten Stufe | 1:2 | 1:2 | - | - |
| Partialdruckverhältnis Propylen:Ethylen in der zweiten Stufe | - | - | 1:2 | 1:2 |
| Ethylenanteil des Propylen-Ethylen-Copolymerisats b) [Gew.-%] | 50 | 50 | 50 | 50 |

Die Eigenschaften der auf diese Weise erhaltenen Mischungen können für die erfindungsgemäßen Beispiele 5 und 6 sowie die Vergleichsbeispiele A und B der nachfolgenden Tabelle 5 entnommen werden.

Tabelle 5

| Eigenschaften der erhaltenen Mischungen | | | | |
|---|---|---|---|---|
| | Beispiele | | Vergleichsbeispiele | |
| | 5 | 6 | A | B |
| Schmelzflußindex[1)] [g/10 min.] | | | | |
| nach der ersten Stufe | <0,3 | <0,3 | 5,1 | 3,1 |
| nach der zweiten Stufe | 5,0 | 3,0 | 4,8 | 2,5 |
| nach der dritten Stufe | 4,7 | 2,5 | - | - |
| Steifigkeit[2)] [N/mm$^2$] | 630 | 570 | 620 | 570 |
| Spritzguß-Spiralfließtest[3)] [cm] | 62,0 | 53,5 | 46,5 | 36,5 |

[1)] nach DIN 53 735, bei 230 °C und 2,16 kg
[2)] nach DIN 53 445
[3)] bei 250 °C, Beschreibung Seite 15

**Patentansprüche**

1. Propylenpolymerisat-Mischungen, enthaltend
   a) ein Propylenhomopolymerisat mit einem Schmelzflußindex von 0,001 bis 5 g/10 min., bei 230 °C und unter einem Gewicht von 2,16 kg,
   b) ein Propylen-Ethylen-Copolymerisat mit einem Ethylengehalt von 5 bis 80 Gew.-% und
   c) ein Propylenhomopolymerisat mit einem Schmelzflußindex von 1 bis $10^4$ g/10 min., bei 230 °C und unter einem Gewicht von 2,16 kg,

   mit der Maßgabe, daß das Verhältnis der Schmelzflußindices des Propylenhomopolymerisats c) und des Propylenhomopolymerisats a) im Bereich von 10 : 1 bis $10^7$ : 1 liegt.

2. Propylenpolymerisat-Mischungen nach Anspruch 1, dadurch gekennzeichnet, daß das Verhältnis der Schmelzflußindices des Propylenhomopolymerisats c) und des Propylenhomopolymerisats a) im Bereich von 10 : 1 bis $10^5$ : 1 liegt.

3. Propylenpolymerisat-Mischungen nach den Ansprüchen 1 oder 2, dadurch gekennzeichnet, daß das Propylenhomopolymerisat a) einen Schmelzflußindex von 0,01 bis 2 g/10 min, bei 230 °C und unter einem Gewicht von 2,16 kg aufweist.

4. Propylenpolymerisat-Mischungen nach den Ansprüchen 1 bis 3, dadurch gekennzeichnet, daß das Propylen-Ethylen-Copolymerisat b) einen Ethylengehalt von 20 bis 75 Gew.-% aufweist.

5. Propylenpolymerisat-Mischungen nach den Ansprüchen 1 bis 4, dadurch gekennzeichnet, daß das Propylenhomopolymerisat c) einen Schmelzflußindex von 1 bis $10^3$ g/10 min., bei 230 °C und ein Gewicht von 2,16 kg aufweist.

6. Propylenpolymerisat-Mischungen nach den Ansprüchen 1 bis 5, dadurch gekennzeichnet, daß sie 40 bis 97 Gew.-% Propylenhomopolymerisate a) und c) und 3 bis 60 Gew.-% Propylen-Ethylen-Copolymerisat b) enthalten.

7. Verfahren zur Herstellung von Mischungen aus verschiedenen Propylenpolymerisaten gemäß den Ansprüchen 1 bis 6, dadurch gekennzeichnet, daß man ein Propylenhomopolymerisat a) mit einem Propylen-Ethylen-Copolymerisat b) und einem Propylenhomopolymerisat c) bei einer Temperatur von 30 bis 280 °C und einem Druck von 1 bis 100 bar miteinander vermischt.

8. Verfahren zur Herstellung von Mischungen aus verschiedenen Propylenpolymerisaten gemäß den Ansprüchen 1 bis 6, dadurch gekennzeichnet, daß man eine Polymermischung I aus einem Propylenhomopolymerisat a) und einem Propylen-Ethylen-Copolymerisat b) mit einem Propylenhomopolymerisat c) bei einer Temperatur von 30 bis 280 °C und einem Druck von 1 bis 100 bar miteinander vermischt.

9. Verfahren zur Herstellung von Mischungen aus verschiedenen Propylenpolymerisaten gemäß den Ansprüchen 1 bis 6, dadurch gekennzeichnet, daß man eine Polymermischung II aus einem Propylenhomopolymerisat c) und einem Propylen-Ethylen-Copolymerisat b) mit einem Propylenhomopolymerisat a) bei einer Temperatur von 30 bis 280 °C und einem Druck von 1 bis 100 bar miteinander vermischt.

10. Verfahren zur Herstellung von Mischungen aus verschiedenen Propylenpolymerisaten gemäß den Ansprüchen 1 bis 6, dadurch gekennzeichnet, daß man zunächst in zwei aufeinanderfolgenden Polymerisationsstufen die beiden Propylenhomopolymerisate a) und c) herstellt und anschließend durch Polymerisation eines Gemisches aus Propylen und Ethylen das Propylen-Ethylen-Copolymerisat c) gewinnt.

11. Folien und Formkörper aus den Propylenpolymerisat-Mischungen gemäß den Ansprüchen 1 bis 6.

## Claims

**1.** A mixture of propylene polymers comprising

a) propylene homopolymer having a melt flow index of from 0.001 to 5 g/10 min at 230 °C and under a weight of 2.16 kg,

b) a propylene-ethylene copolymer having an ethylene content of from 5 to 80% by weight, and

c) a propylene homopolymer having a melt flow index of from 1 to $10^4$ g/10 min at 230 °C and under a weight of 2.16 kg,

with the proviso that the ratio between the melt flow indices of the propylene homopolymer c) and the propylene homopolymer a) is in the range from 10:1 to $10^7$:1.

**2.** A mixture of propylene polymers as claimed in claim 1, wherein the ratio between the melt flow indices of the propylene homopolymer c) and the propylene homopolymer a) is in the range from 10:1 to $10^5$:1.

**3.** A mixture of propylene polymers as claimed in claim 1 or 2, wherein the propylene homopolymer a) has a melt flow index of from 0.01 to 2 g/10 min at 230 °C and under a weight of 2.16 kg.

**4.** A mixture of propylene polymers as claimed in any of claims 1 to 3, wherein the propylene-ethylene copolymer b) has an ethylene content of from 20 to 75% by weight.

**5.** A mixture of propylene polymers as claimed in any of claims 1 to 4, wherein the propylene homopolymer c) has a melt flow index of from 1 to $10^3$ g/10 min at 230 °C and under a weight of 2.16 kg.

**6.** A mixture of propylene polymers as claimed in any of claims 1 to 5, which comprises from 40 to 97% by weight of propylene homopolymers a) and c) and from 3 to 60% by weight of propylene-ethylene copolymer b).

**7.** A process for the preparation of a mixture of various propylene polymers as claimed in any of claims 1 to 6, which comprises mixing a propylene homopolymer a) with a propylene-ethylene copolymer b) and a propylene homopolymer c) at from 30 to 280 °C and at from 1 to 100 bar.

**8.** A process for the preparation of a mixture of various propylene polymers as claimed in any of claims 1 to 6, wherein a polymer mixture I comprising a propylene homopolymer a) and a propylene-ethylene copolymer b) is mixed with a propylene homopolymer c) at from 30 to 280 °C and at from 1 to 100 bar.

**9.** A process for the preparation of a mixture of various propylene polymers as claimed in any of claims 1 to 6, wherein a polymer mixture II comprising a propylene homopolymer c) and a propylene-ethylene copolymer b) is mixed with a propylene homopolymer a) at from 30 to 280 °C and at from 1 to 100 bar.

**10.** A process for the preparation of a mixture of various propylene polymers as claimed in any of claims 1 to 6, which comprises first preparing the two propylene homopolymers a) and c) in two successive polymerization steps and subsequently obtaining the propylene-ethylene copolymer c) by polymerization of a mixture of propylene and ethylene.

**11.** A film or molding made from a mixture of propylene polymers as claimed in any of claims 1 to 6.

## Revendications

**1.** Mélanges de polymères de propylène, contenant

a) un homopolymère de propylène ayant un indice de fluidité à l'état fondu de 0,001 à 5 g/10 min, à 230 °C et sous un poids de 2,16 kg,

b) un copolymère propylène/éthylène ayant une teneur en éthylène de 5 à 80% en poids et

c) un homopolymère de propylène ayant un indice de fluidité à l'état fondu de 1 à $10^4$ g/10 min, à 230 °C et sous un poids de 2,16 kg,

étant spécifié que le rapport des indices de fluidité à l'état fondu de l'homopolymère de propylène c) et de l'homopolymère de propylène a) se situe dans la gamme de 10 : 1 à $10^7$ : 1.

2. Mélanges de polymères de propylène selon la revendication 1, caractérisés en ce que le rapport des indices de fluidité a l'état fondu de l'homopolymère de propylène c) et de l'homopolymère de propylène a) se situe dans la gamme de 10 : 1 à $10^5$ : 1.

3. Mélanges de polymères de propylène selon la revendication 1 ou 2, caractérisés en ce que l'homopolymère de propylène a) présente un indice de fluidité à l'état fondu de 0,01 à 2 g/10 min, à 230 °C et sous un poids de 2,16 kg.

4. Mélanges de polymères de propylène selon l'une quelconque des revendications 1 à 3, caractérisés en ce que le copolymère propylène/éthylène b) présente une teneur en éthylène de 20 à 75% en poids.

5. Mélanges de polymères de propylène selon l'une quelconque des revendications 1 à 4, caractérisés en ce que l'homopolymère de propylène c) présente un indice de fluidité à l'état fondu de 1 à $10^3$ g/10 min, à 230 °C et sous un poids de 2,16 kg,

6. Mélanges de polymères de propylène selon l'une quelconque des revendications 1 à 5, caractérisés en ce qu'ils contiennent de 40 à 97% en poids d'homopolymères de propylène a) et c) et de 3 à 60% en poids de copolymère propylène/éthylène b).

7. Procédé de préparation de mélanges de différents polymères de propylène selon l'une quelconque des revendications 1 à 6, caractérisé en ce que l'on mélange un homopolymère de propylène a) à un copolymère propylène/éthylène b) et à un homopolymère de propylène c) à une température de 30 à 280 °C et sous une pression de 1 à 100 bar.

8. Procédé de préparation de mélanges de différents polymères de propylène selon l'une quelconque des revendications 1 à 6, caractérisé en ce que l'on mélange un mélange de polymères I, contenant un homopolymère de propylène a) et un copolymère propylène/éthylène b), à un homopolymère de propylène c) à une température de 30 à 280 °C et sous une pression de 1 à 100 bar.

9. Procédé de préparation de mélanges de différents polymères de propylène selon l'une quelconque des revendications 1 à 6, caractérisé en ce que l'on mélange un mélange de polymères II, contenant un homopolymère de propylène c) et un copolymère propylène/éthylène b), à un homopolymère de propylène a) à une température de 30 à 280 °C et sous une pression de 1 à 100 bar.

10. Procédé de préparation de mélanges de différents polymères de propylène selon l'une quelconque des revendications 1 à 6, caractérisé en ce que l'on commence par préparer, dans deux étapes de polymérisation successives, les deux homopolymères de propylène a) et c), puis on prépare le copolymère propylène/éthylène b) par polymérisation d'un mélange de propylène et d'éthylène.

11. Feuilles et corps moulés, fabriqués à partir des mélanges de polymères de propylène selon l'une quelconque des revendications 1 à 6.